# EUROPÄISCHE PATENTSCHRIFT

(11) **EP 2 886 385 B1**
(45) Veröffentlichungstag und Bekanntmachung des Hinweises auf die Patenterteilung: **18.12.2019**
(21) Anmeldenummer: 14174936.6
(22) Anmeldetag: 13.02.2012
(51) Int. Cl.: B60K 35/00

(54) **ANZEIGEEINRICHTUNG FÜR EIN FAHRZEUG**
DISPLAY DEVICE FOR A VEHICLE
DISPOSITIF D'AFFICHAGE POUR UN VÉHICULE

(30) Priorität: 07.04.2011 DE 102011016290
(43) Veröffentlichungstag der Anmeldung: 24.06.2015
(62) Teilanmeldung aus: 12721707.3
(73) Patentinhaber: Volkswagen Aktiengesellschaft, 38440 Wolfsburg (DE)
(72) Erfinder: Kuhn, Mathias, 14129 Berlin (DE); Lou, Jian, 10707 Berlin (DE); Trabucco, Luigi, 38442 Wolfsburg (DE); Paravantes, George, Toronto, Ontario M1V 2M1 (CA)

(56) Entgegenhaltungen:
- EP-A2- 0 903 712
- DE-A1- 10 012 952
- DE-A1-102007 029 651
- DE-A1-102007 057 548

## Beschreibung

Die vorliegende Erfindung betrifft eine Anzeigeeinrichtung für ein Fahrzeug mit zumindest einem Display, einer Steuervorrichtung, die mit dem Display gekoppelt ist und mittels welcher Grafikdaten zur Anzeige auf dem Display erzeugbar sind. Ferner umfasst die Anzeigeeinrichtung eine Schnittstelle zum Empfangen eines Steuersignals zum Einstellen eines Modus.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Der vorliegenden Erfindung liegt die Aufgabe zugrunde, eine Anzeigeeinrichtung der eingangs genannten Art bereitzustellen, mittels welcher der Fahrer des Fahrzeugs in Abhängigkeit von der Fahrsituation besser über relevante Betriebsparameter des Fahrzeugs informiert werden kann.

Erfindungsgemäß wird diese Aufgabe durch eine Anzeigeeinrichtung mit den Merkmalen des Anspruchs 1 bzw. Anspruchs 13 und Anspruchs 14 gelöst. Vorteilhafte Ausgestaltungen und Weiterbildungen ergeben sich aus den abhängigen Ansprüchen.

Bei der erfindungsgemäßen Anzeigeeinrichtung ist in Abhängigkeit von den gespeicherten Daten für den Energieverbrauch mittels der Steuervorrichtung auf einer einzigen Entfernungsskala die Restreichweite, die Entfernung zur nächsten Tankstelle und die Entfernung von dem Ziel der Zielführungseinrichtung anzeigbar sind. Durch die Darstellung der Anzeigeinhalte in verschiedenen Modi in Abhängigkeit von der jeweiligen Fahrsituation des Fahrzeugs wird erreicht, dass dem Fahrer vorteilhafterweise die in der jeweiligen Fahrsituation besonders relevanten Informationen angezeigt werden und weniger relevante Informationen weggelassen werden.

Gemäß einer Ausgestaltung der erfindungsgemäßen Anzeigeeinrichtung ist vor dem Display eine Blende angeordnet, welche das Display in zumindest drei Kammern unterteilt. In diesem Fall ist das Display mittels der Steuervorrichtung unabhängig von dem eingestellten Modus insbesondere so ansteuerbar, dass in der ersten Kammer Informationen einer Zielführungseinrichtung, zum Beispiel eines Navigationssystems des Fahrzeugs, dargestellt werden. In der zweiten Kammer wird beispielsweise eine Skala zur Anzeige der Geschwindigkeit des Fahrzeugs angezeigt und in der dritten Kammer eine Skala zum Anzeigen zumindest eines weiteren Betriebsparameters des Fahrzeugs. Durch diese Aufteilung des Displays wird vorteilhafterweise erreicht, dass sich der Fahrer leichter innerhalb der dargestellten Anzeigeinhalte orientieren kann. Ferner wird sichergestellt, dass unabhängig von dem eingestellten Modus immer die Informationen der Zielführungseinrichtung dargestellt werden.

Gemäß einer Ausgestaltung der erfindungsgemäßen Anzeigeeinrichtung ist im Sportmodus die Leistung des Antriebsmotors des Fahrzeugs mittels eines ersten Sensors erfassbar und mittels eines Speichers speicherbar. Mittels der Steuervorrichtung ist in Abhängigkeit von den gespeicherten Daten für die Leistung des Antriebsmotors für ein zurückliegendes Zeitintervall die Leistung des Antriebsmotors auf dem Display anzeigbar. Vorteilhafterweise erhält der Fahrer somit im Sportmodus einen Überblick über das Ausreizen der Gesamtleistung des Fahrzeugs.

Gemäß einer weiteren Ausgestaltung der erfindungsgemäßen Anzeigeeinrichtung ist im Stadtmodus der Energieverbrauch zumindest des Antriebsmotors des Fahrzeugs mittels eines zweiten Sensors erfassbar und mittels des Speichers speicherbar. Mittels der Steuervorrichtung ist in Abhängigkeit von den gespeicherten Daten für den Energieverbrauch des Antriebsmotors für ein zurückliegendes Zeitintervall der Energieverbrauch des Antriebsmotors auf dem Display anzeigbar. Dem Fahrer wird somit im Stadtmodus die in diesem Fall relevante Information zum Energieverbrauch des Fahrzeugs angezeigt, die weniger relevante Information zur Leistung des Antriebsmotors kann hingegen ausgeblendet werden.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Anzeigeeinrichtung,
- Figur 2: zeigt die Anordnung des Ausführungsbeispiels der erfindungsgemäßen Anzeigeeinrichtung im Fahrzeug, wobei die Anzeige des Sportmodus wiedergegeben wird,
- Figur 3: zeigt die Anordnung des Ausführungsbeispiels der erfindungsgemäßen Anzeigeeinrichtung im Fahrzeug, wobei die Anzeige des Offroad-Modus wiedergegeben wird,
- Figur 4: zeigt die Anordnung des Ausführungsbeispiels der erfindungsgemäßen Anzeigeeinrichtung im Fahrzeug, wobei die Anzeige des Stadtmodus wiedergegeben wird,
- Figur 5: zeigt im Detail die Anzeige des Displays des Kombiinstruments im Sportmodus,
- Figur 6: zeigt eine perspektivische Ansicht des Displays des Kombiinstruments,
- Figur 7 und Figur 7a: zeigen Anzeigen des Displays im Sportmodus,
- Figur 8 und Figuren 8a bis 8d: zeigen Anzeigen des Displays im Offroad-Modus und
- Figur 9 und Figur 9a: zeigen Anzeigen des Displays im Stadtmodus.

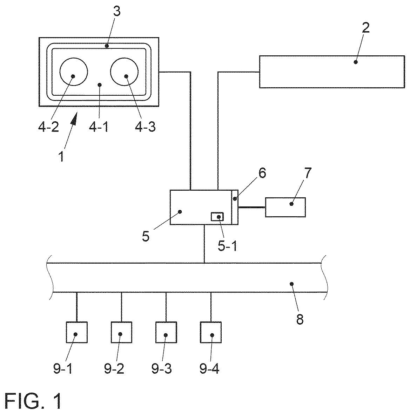

Der prinzipielle Aufbau der erfindungsgemäßen Anzeigeeinrichtung wird im Folgenden mit Bezug zu Fig. 1 erläutert:
Die Anzeigeeinrichtung umfasst ein Display 1. Ferner kann die Anzeigeeinrichtung ein zweites Display 2 umfassen. Die Anzeigefläche des Displays 1 ist durch eine Blende 3 in Betrachtungsrichtung in drei Kammern 4-1, 4-2 und 4-3 unterteilt. Die Blende 3 weist hierfür Abstellungen bzw. Wände auf, die sich im Wesentlichen senkrecht von der Anzeigefläche des Displays 1 weg in Richtung des Betrachters erstrecken. In den Kammern 4-2 und 4-3 werden klassische Zeiger-Skala-Anzeigen für die Geschwindigkeit des Fahrzeugs und die Drehzahl des Antriebsmotors des Fahrzeugs angezeigt. Zwischen diesen beiden Rundinstrumenten in den Kammern 4-2 und 4-3 wird mittig in der Kammer 4-1 die Anzeige eines Navigationssystems des Fahrzeugs dargestellt.

Die Displays 1 und 2 sind mit einer Steuervorrichtung 5 verbunden. Die Steuervorrichtung 5 ist über eine Schnittstelle 6 wiederum mit einer Eingabeeinrichtung 7 gekoppelt. Mittels der Eingabeeinrichtung 7 kann der Nutzer zwischen verschiedenen Modi für die Anzeige auf den Displays 1 und 2 umschalten. Von der Eingabeeinrichtung 7 wird ein entsprechendes Steuersignal über die Schnittstelle 6 an die Steuervorrichtung 5 übertragen. Es wäre jedoch auch möglich, dass statt der Einstellung des Modus durch den Nutzer, der Modus automatisch von einer weiteren Einrichtung auf Basis verschiedener Betriebsparameter des Fahrzeugs ermittelt wird und an die Steuervorrichtung 5 übertragen wird.

Die Eingabeeinrichtung 7 kann beispielsweise einen Drehsteller in der Mittelkonsole des Fahrzeugs umfassen. Ferner kann die Eingabeeinrichtung 7 eine berührungsempfindliche Oberfläche in der Mittelkonsole oder auf der Anzeigefläche des Displays 2 umfassen.

Die Steuervorrichtung 5 ist ferner mit einem Datenbus 8 des Fahrzeugs gekoppelt. Der Datenbus 8 ist wiederum mit einem ersten Sensor 9-1 zum Erfassen der Leistung des Antriebsmotors des Fahrzeugs 10, mit einem zweiten Sensor 9-2 zum Erfassen des Energieverbrauchs des Antriebsmotors des Fahrzeugs, mit einem dritten Sensor 9-3 zum Erfassen der Bodenfreiheit des Fahrzeugs und mit einem vierten Sensor 9-4 zum Erfassen der Neigung des Fahrzeugs um eine Längsachse und eine Querachse des Fahrzeugs verbunden. Die von den Sensoren 9-1 bis 9-4 erfassten Daten werden über den Datenbus 8 an die Steuervorrichtung 5 übertragen. Ferner werden über den Datenbus 8 Daten zur Geschwindigkeit des Fahrzeugs und der Drehzahl des Motors des Fahrzeugs 10 an die Steuervorrichtung 5 übertragen. Ein in der Steuervorrichtung 5 integrierter Speicher 5-1 speichert diese Daten zwischen. Die Steuervorrichtung 5 kann dann auf Basis der in dem Speicher 5-1 gespeicherten Daten Grafikdaten für die Anzeige auf den Displays 1 und 2 erzeugen.

Die Steuervorrichtung 5 steuert in Abhängigkeit von dem über die Schnittstelle 6 übertragenen Steuersignal zum Einstellen des Modus das Display 1 und ggf. auch das Display 2 so an, dass die Anzeigeinhalte in einem Sportmodus, in einem Stadtmodus oder in einem Offroad-Modus angezeigt werden. Beim Umschalten zwischen diesen Modi, zum Beispiel mittels eines Drehstellers der Eingabeeinrichtung 7, ändern sich somit die Anzeigeinhalte auf dem Display 1. Bei dem hier beschriebenen Ausführungsbeispiel ändern sich die Anzeigeinhalte jedoch auf beiden Displays 1 und 2.

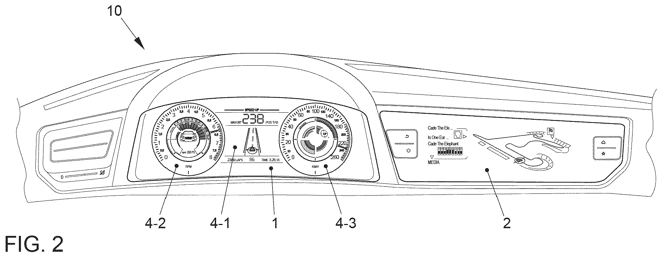

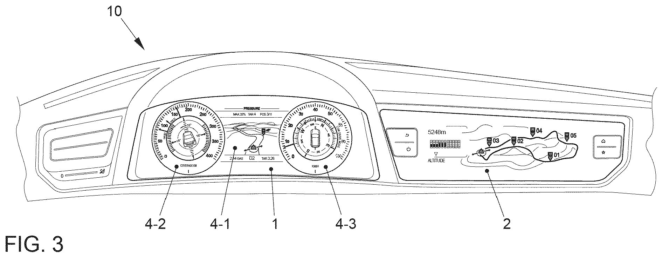

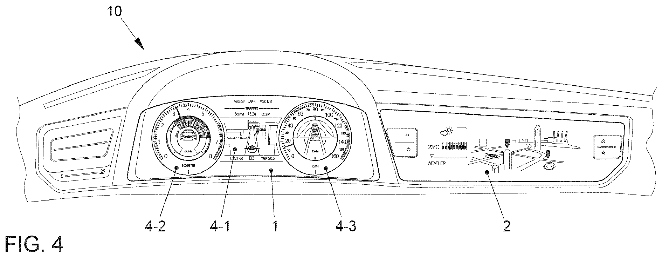

In Fig. 2 ist die Anordnung der Displays 1 und 2 in einem Fahrzeug 10 gezeigt. Das Display 1 stellt die Anzeige des sogenannten Kombiinstruments des Fahrzeugs 10 bereit, das Display 2 ist vor der Sitzposition des Beifahrers des Fahrzeugs 10 angeordnet und stellt Anzeigeinhalte dar, die für den Beifahrer aufbereitet sind. In Fig. 2 ist die Anzeige im Sportmodus, in Fig. 3 ist die Anzeige im Offroad-Modus und in Fig. 4 ist die Anzeige im Stadtmodus dargestellt.

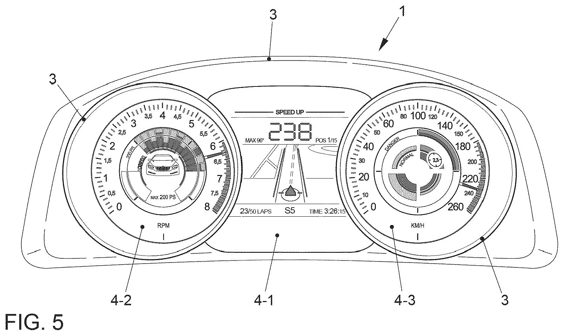

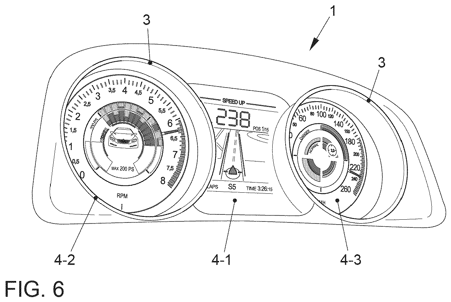

Die Anzeige im Sportmodus ist nochmals in den Fig. 5, 6 und 7 im Detail dargestellt, wobei in Fig. 6 die Unterteilung des Displays 1 mittels der Blende 3 am besten erkennbar ist.

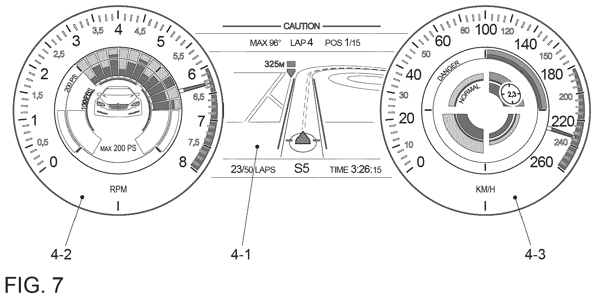

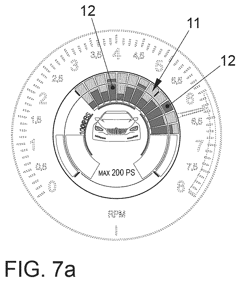

Im Folgenden wird die Anzeige im Sportmodus auf dem Display 1 anhand der Fig. 7 und 7a erläutert:
Innerhalb der auf einem Teilkreis befindlichen Skala für die Drehzahl des Motors wird ein Anzeigeelement 11 für ein sogenanntes Power-Meter dargestellt. Dieses Anzeigeelement 11 gibt dem Fahrer einen Überblick über das Ausreizen der Gesamtleistung des Antriebsmotors des Fahrzeugs 10. Hierfür wird die Leistung des Antriebsmotors des Fahrzeugs 10 mittels des Sensors 9-1 erfasst und an die Steuervorrichtung 5 übertragen. Diese erzeugt aus diesen Daten für ein zurückliegendes Zeitintervall eine Balkendarstellung mit den Balken 12, wobei jeder Balken einen Durchschnittswert der Leistung in einem bestimmten Teilzeitintervall von beispielsweise einer Minute darstellt. Nach jeder Minute rücken die Balken 12 weiter. Die Länge der Balken stellt die Größe des Wertes der Gesamtleistung in dem entsprechenden Teilzeitintervall dar.

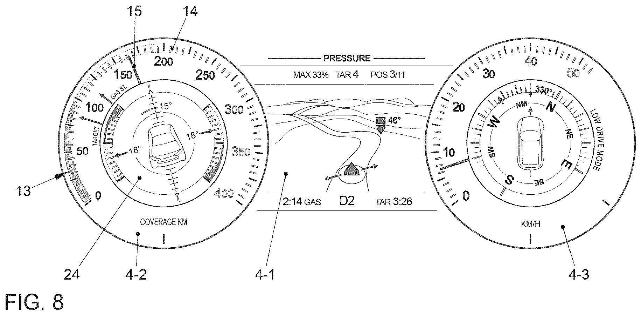

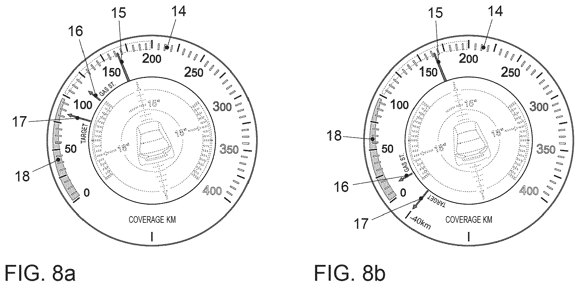

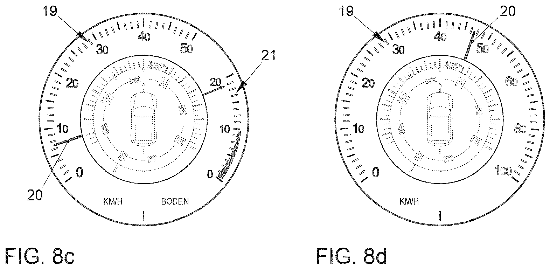

Mit Bezug zu den Fig. 8 und 8a bis 8d wird die Anzeige auf dem Display 1 im Offroad-Modus erläutert:
Statt der Skala für die Anzeige der Drehzahl des Antriebsmotors des Fahrzeugs 10 wird im Offroad-Modus eine sogenannte "Sprit-Management-Anzeige" 13 dargestellt. Die Anzeige 13 umfasst eine als Rundinstrument ausgebildetes Skala 14, welche Entfernungswerte in Kilometern darstellt. Wie insbesondere aus Fig. 8a ersichtlich, sind ferner drei Zeigerelemente 15, 16 und 17 vorgesehen. Das Zeigerelement 15 zeigt die Restreichweite des Fahrzeugs 10 an, welche die Steuervorrichtung 5 auf Basis des Energieverbrauchs berechnet, welcher von dem Sensor 9-2 übertragen wurde. Bei der Berechnung der Restreichweite berücksichtigt die Steuervorrichtung 5 den Fahrstil des aktuellen Fahrers. Die Restreichweite kann daher in Abhängigkeit von dem Fahrstil variieren. Die digitale Anzeige hierfür passt sich entsprechend dem Fahrstil an.

Das Zeigerelement 16 zeigt die Entfernung von der nächsten Tankstelle an. Diese Entfernung kann das Navigationssystem der Steuervorrichtung 5 übertragen. Schließlich zeigt das Zeigerelement 17 die Entfernung bis zu einem Ziel an, welches in das Navigationssystem des Fahrzeugs 10 eingegeben wurde. Auch diese Entfernung kann der Steuervorrichtung 5 von dem Navigationssystem übertragen werden. Die von den Zeigeelementen 15, 16 und 17 angezeigten Werte sind in einer Anzeige vereint und stehen in logischer und direkter Beziehung zueinander. Sie verwenden insbesondere dieselbe Entfernungsskala 14. Außerdem hängen die Werte voneinander ab.

Schließlich wird im Grenzbereich der Skala 14 durch ein Anzeigeelement 18 die Tankreserve des Fahrzeugs 10 angezeigt.

Anstatt die Entfernung von dem Ziel mittels des Zeigeelements 17 direkt auf der Skala 14 anzuzeigen, wird gemäß einer anderen Ausgestaltung von dem Zeigerelement 17 die Restreichweite minus der Entfernung von dem Ziel angezeigt. Das Zeigerelement 17 zeigt in diesem Fall die verbleibende Restreichweite beim Erreichen des Ziels an, sofern der Wert positiv ist. Wenn der Wert negativ ist, wird angezeigt, dass das Ziel nicht mit dem aktuellen Tankinhalt erreicht werden kann. Die Größe des negativen Werts zeigt an, bis zu welcher Entfernung man mit dem aktuellen Tankinhalt noch zum Ziel kommen würde. Gleichermaßen kann auch das Zeigerelement 16 nicht die Entfernung zu der nächsten Tankstelle anzeigen, sondern die Differenz der Restreichweite und der Entfernung zur nächsten Tankstelle. In diesem Fall bedeuten positive Werte, die von dem Zeigerelement 16 angezeigt werden, dass die nächste Tankstelle mit der aktuellen Energiemenge im Tank des Fahrzeugs 10 noch erreicht werden kann.

Bei der in Fig. 8b dargestellten Stellung des Zeigeelements 17 für die Entfernung zum Ziel, würde der Fahrer des Fahrzeugs 10 sehen, dass das Ziel außerhalb der Reichweite des Fahrzeugs 10 wäre, sodass er es mit der aktuellen Tankfüllung nicht erreichen kann. Jedoch wird dem Fahrer auch angezeigt, dass sich auf der Strecke eine Tankstelle befindet, die er mit der Restfüllung des Tanks erreichte könnte. Dies wird durch das Zeigerelement 16 dargestellt. Wäre die nächste Tankstelle auf der Route nun auch außerhalb der Restreichweite, müsste die zuvor geplante Route geändert werden und zunächst die nächstliegende Tankstelle angefahren und danach die geplante Route wieder aufgenommen werden.

In Fig. 8c ist eine veränderte Geschwindigkeitsanzeige 19 im Offroad-Modus dargestellt. Dabei ist der Wert für die Maximalgeschwindigkeit auf der Skala für die Geschwindigkeit verringert, im vorliegenden Fall ist der Maximalwert 50 km/h. Ferner ist die Länge der auf einem Kreisbogen dargestellten Skala für die Geschwindigkeit verkürzt im Vergleich zu der Skala für die Geschwindigkeitsanzeige in den anderen Modi.

Der durch die Verkürzung der Geschwindigkeitsskala gewonnene Platz wird durch ein Anzeigeelement 21 genutzt, welches die Bodenfreiheit des Fahrzeugs 10 anzeigt. Dieses Anzeigeelement 21 wird nur dann angezeigt, wenn die Geschwindigkeitsskala mit der verringerten Maximalgeschwindigkeit angezeigt wird. Wenn das Fahrzeug 10 eine höhere Geschwindigkeit, beispielsweise in einem Bereich von 40 km/h bis 50 km/h erreicht, wird das Anzeigeelement 21 wieder ausgeblendet und die Geschwindigkeitsanzeige 19 erweitert sich, wie in Fig. 8d dargestellt.

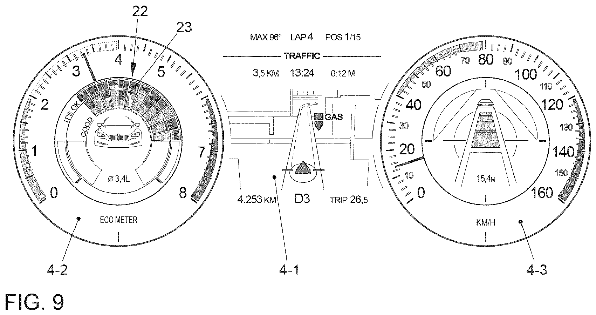

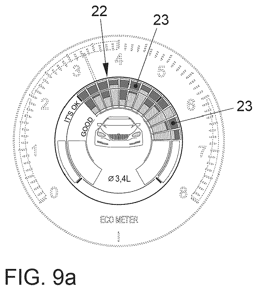

Mit Bezug zu den Fig. 9 und 9a wird die Anzeige im Stadtmodus erläutert:
Diese Anzeige gleicht im Wesentlichen der Anzeige für den Sportmodus, nur invertiert. Die Anzeige zeigt mittels eines Anzeigelements 22 den Durchschnittsverbrauch für ein zurückliegendes Zeitintervall an. Dabei zeigen die Balken 23 den Durchschnittsverbrauch für ein Teilzeitintervall an. Bei dem in Fig. 9 gezeigten Beispiel wird beispielsweise ein Überblick zum Verbrauch der letzten 12 Minuten angezeigt. Je geringer der Verbrauch ist, desto größer sind die Balken 23 des Anzeigeelements 22 ausgebildet. Das Anzeigeelement 22 wird innerhalb der Skala des Rundinstruments für die Drehzahl des Antriebsmotors des Fahrzeugs 10 angezeigt.

### BEZUGSZEICHENLISTE

- 1: Display
- 2: Display
- 3: Blende
- 4-1: Kammer
- 4-2: Kammer
- 4-3: Kammer
- 5: Steuervorrichtung
- 5-1: Speicher
- 6: Schnittstelle
- 7: Eingabeeinrichtung
- 8: Datenbus
- 9-1: Sensor
- 9-2: Sensor
- 9-3: Sensor
- 9-4: Sensor
- 10: Fahrzeug
- 11: Anzeigeelement für die Leistung
- 12: Balken
- 13: Anzeigeelement im Offroad-Modus
- 14: Skala
- 15: Zeigerelement
- 16: Zeigerelement
- 17: Zeigerelement
- 18: Anzeigeelement für den Tankinhalt
- 19: Reduzierte Geschwindigkeitsskala
- 20: Zeigerelement
- 21: Anzeigeelement für die Bodenfreiheit
- 22: Anzeigeelement für den Energieverbrauch
- 23: Balken
- 24: Anzeigeelement für den Neigungswinkel

## Patentansprüche

1. Anzeigeeinrichtung für ein Fahrzeug (10) mit
- zumindest einem Display (1),
- einer Steuervorrichtung (5), die mit dem Display (1) gekoppelt ist und mittels welcher Grafikdaten zur Anzeige auf dem Display (1) erzeugbar sind, und
- einem ersten Sensor (9-2), mit dem der Energieverbrauch zumindest des Antriebsmotors des Fahrzeugs (10) erfassbar und mittels eines Speichers (5-1) speicherbar ist,
**dadurch gekennzeichnet, dass**
- in Abhängigkeit von den gespeicherten Daten für den Energieverbrauch mittels der Steuervorrichtung (5) auf einer einzigen Entfernungsskala (14) die Restreichweite, die Entfernung zur nächsten Tankstelle und die Entfernung von dem Ziel der Zielführungseinrichtung anzeigbar sind.

2. Anzeigeeinrichtung nach Anspruch 1, **dadurch gekennzeichnet, dass** die Restreichweite, die Entfernung zur nächsten Tankstelle und die Entfernung von dem Ziel der Zielführungseinrichtung mittels mehrerer Zeiger (15, 16, 17) auf der Entfernungsskala (14) anzeigbar sind.

3. Anzeigeeinrichtung nach Anspruch 1 oder 2, **dadurch gekennzeichnet, dass** im Grenzbereich der Entfernungsskala (14) durch ein Anzeigeelement (18) die Tankreserve des Fahrzeugs (10) anzeigbar ist.

4. Anzeigeeinrichtung nach einem der vorhergehenden Ansprüche, **dadurch gekennzeichnet, dass** die Anzeigeeinrichtung eine Schnittstelle (6) zum Empfangen eines Steuersignals zum Einstellen eines Modus umfasst und dass in Abhängigkeit von einem über die Schnittstelle übertragenen Steuersignal mittels der Steuervorrichtung (5) das Display (1) so ansteuerbar ist, dass die Anzeigeinhalte in zumindest einem Sportmodus, in einem Stadtmodus oder in einem Offroad-Modus angezeigt werden.

5. Anzeigeeinrichtung nach einem der vorhergehenden Ansprüche, **dadurch gekennzeichnet, dass** vor dem Display (1) eine Blende (3) angeordnet ist, welche das Display in zumindest drei Kammern (4-1, 4-2, 4-3) unterteilt.

6. Anzeigeeinrichtung nach Anspruch 5, **dadurch gekennzeichnet, dass** unabhängig von dem eingestellten Modus mittels der Steuervorrichtung (5) das Display (1) so ansteuerbar ist, dass in der ersten Kammer (4-1) Informationen einer Zielführungseinrichtung dargestellt werden.

7. Anzeigeeinrichtung nach Anspruch 5 oder 6, **dadurch gekennzeichnet, dass** mittels der Steuervorrichtung (5) das Display (1) so ansteuerbar ist, dass in der zweiten Kammer (4-3) eine Skala zur Anzeige der Geschwindigkeit des Fahrzeugs (10) und in der dritten Kammer (4-2) eine Skala zum Anzeigen zumindest eines weiteren Betriebsparameters des Fahrzeugs angezeigt wird.

8. Anzeigeeinrichtung nach einem der vorhergehenden Ansprüche, **dadurch gekennzeichnet, dass** im Sportmodus die Leistung des Antriebsmotors des Fahrzeugs (10) mittels eines zweiten Sensors (9-1) erfassbar und mittels eines Speichers (5-1) speicherbar ist, und dass mittels der Steuervorrichtung (5) in Abhängigkeit von den gespeicherten Daten für die Leistung des Antriebsmotors für ein zurückliegendes Zeitintervall die Leistung des Antriebsmotors auf dem Display anzeigbar ist.

9. Anzeigeeinrichtung nach einem der vorhergehenden Ansprüche, **dadurch gekennzeichnet, dass** im Stadtmodus der Energieverbrauch zumindest des Antriebsmotors des Fahrzeugs (10) mittels des ersten Sensors (9-2) erfassbar und mittels des Speichers (5-1) speicherbar ist, und dass mittels der Steuervorrichtung (5) in Abhängigkeit von den gespeicherten Daten für den Energieverbrauch des Antriebsmotors für ein zurückliegendes Zeitintervall der Energieverbrauch des Antriebsmotors auf dem Display (1) anzeigbar ist.

10. Anzeigeeinrichtung nach einem der vorhergehenden Ansprüche, **dadurch gekennzeichnet, dass** im Offroad-Modus der Energieverbrauch zumindest des Antriebsmotors des Fahrzeugs (10) mittels des ersten Sensors (9-2) erfassbar und mittels des Speichers (5-1) speicherbar ist, und mittels der Steuervorrichtung (5) in Abhängigkeit von den gespeicherten Daten für den Energieverbrauch in der Entfernungsskala (14) für einen weiteren Betriebsparameter des Fahrzeugs (10) die Restreichweite, die Entfernung zur nächsten Tankstelle und/oder die Entfernung von einem Ziel der Zielführungseinrichtung auf dem Display (1) anzeigbar ist/sind.

11. Anzeigeeinrichtung nach einem der vorhergehenden Ansprüche, **dadurch gekennzeichnet, dass** im Offroad-Modus die Bodenfreiheit des Fahrzeugs mittels eines dritten Sensors (9-3) erfassbar und mittels der Steuervorrichtung die Bodenfreiheit des Fahrzeugs (10) auf dem Display (1) anzeigbar ist.

12. Anzeigeeinrichtung nach einem der vorhergehenden Ansprüche, **dadurch gekennzeichnet, dass** im Offroad-Modus mittels der Steuervorrichtung (5) das Display (1) so ansteuerbar ist, dass die Maximalgeschwindigkeit der Skala (19) für die Anzeige der Geschwindigkeit des Fahrzeugs (10) verringert ist.

13. Anzeigeeinrichtung für ein Fahrzeug (10) mit
- zumindest einem Display (1),
- einer Steuervorrichtung (5), die mit dem Display (1) gekoppelt ist und mittels welcher Grafikdaten zur Anzeige auf dem Display (1) erzeugbar sind, und
- einem ersten Sensor (9-2), mit dem der Energieverbrauch zumindest des Antriebsmotors des Fahrzeugs (10) erfassbar und mittels eines Speichers (5-1) speicherbar ist,
**dadurch gekennzeichnet, dass**
- in Abhängigkeit von den gespeicherten Daten für den Energieverbrauch mittels der Steuervorrichtung (5) auf einer einzigen Entfernungsskala (14) die Restreichweite, die Entfernung zur nächsten Tankstelle und die Restreichweite minus der Entfernung von dem Ziel der Zielführungseinrichtung anzeigbar sind.

14. Anzeigeeinrichtung für ein Fahrzeug (10) mit
- zumindest einem Display (1),
- einer Steuervorrichtung (5), die mit dem Display (1) gekoppelt ist und mittels welcher Grafikdaten zur Anzeige auf dem Display (1) erzeugbar sind, und
- einem ersten Sensor (9-2), mit dem der Energieverbrauch zumindest des Antriebsmotors des Fahrzeugs (10) erfassbar und mittels eines Speichers (5-1) speicherbar ist,
**dadurch gekennzeichnet, dass**
- in Abhängigkeit von den gespeicherten Daten für den Energieverbrauch mittels der Steuervorrichtung (5) auf einer einzigen Entfernungsskala (14) die Restreichweite, die Differenz der Restreichweite und der Entfernung zur nächsten Tankstelle und die Entfernung von dem Ziel der Zielführungseinrichtung anzeigbar sind.

## Claims

1. A display device for a vehicle (10) having
- at least one display (1),
- a control device (5), which is coupled with the display (1) and by means of which graphic data can be generated for display on the display (1), and
- a first sensor (9-2), with which the energy consumption at least of the drive motor of the vehicle (10) can be detected and can be stored by means of a memory (5-1),
**characterized in that**
- depending on the stored data for the energy consumption the remaining range, the distance to the next gas station and the distance from the destination of the destination guide device can be displayed by means of the control device (5) on a single distance scale (14).

2. The display device according to Claim 1, **characterized in that** the remaining range, the distance to the next gas station and the distance from the destination of the destination guide device can be displayed by means of a plurality of pointers (15, 16, 17) on the distance scale (14).

3. The display device according to Claim 1 or 2, **characterized in that** the tank reserve of the vehicle (10) can be displayed by a display element (18) in a boundary region of the distance scale (14).

4. The display device according to any one of the preceding claims, **characterized in that** the display device comprises an interface (6) for receiving a control signal for setting a mode and that depending on a control signal transmitted via the interface the display (1) can be controlled by means of the control device (5) such that the display contents are displayed in at least a sport mode, in a city mode and in an off-road mode.

5. The display device according to any one of the preceding claims, **characterized in that** a screen (3) is arranged in front of the display (1), which divides the display into at least three chambers (4-1, 4-2, 4-3).

6. The display device according to Claim 5, **characterized in that** independent of the mode set by means of the control device (5) the display (1) can be controlled such that information of a destination guide device can be shown in the first chamber (4-1).

7. The display device according to Claim 5 or 6, **characterized in that** by means of the control device (5) the display (1) can be controlled such that in the second chamber (4-3) a scale for display of the speed of the vehicle (10) and in the third chamber (4-2) a scale for display of at least one further operating parameter of the vehicle is displayed.

8. The display device according to any one of the preceding claims, **characterized in that** in the sport mode the power of the drive motor of the vehicle (10) can be detected by means of a second sensor (9-1) and can be stored by means of a memory (5-1), and that by means of the control device (5) the power of the drive motor can be displayed on the display depending on the stored data for the power of the drive motor for a past time interval.

9. The display device according to any one of the preceding claims, **characterized in that** in the city mode the energy consumption at least of the drive motor of the vehicle (10) can be detected by means of the first sensor (9-2) and can be stored by means of the memory (5-1), and that the energy consumption of the drive motor can be displayed on the display (1) by means of the control device (5) depending on the stored data for the energy consumption of the drive motor for a past time interval.

10. The display device according to any one of the preceding claims, **characterized in that** in the off-road mode the energy consumption at least of the drive motor of the vehicle (10) can be detected by means of the first sensor (9-2) and can be stored by means of the memory (5-1), and the remaining range, the distance to the next gas station and/or the distance from a destination of the destination guide device can be displayed on the display (1) by means of the control device (5) depending on the stored data for the energy consumption in the distance scale (14) for a further operating parameter of the vehicle (10).

11. The display device according to any one of the preceding claims, **characterized in that** in the off-road mode the ground clearance of the vehicle can be detected by means of a third sensor (9-3) and the ground clearance of the vehicle (10) can be displayed on the display (1) by means of the control device.

12. The display device according to any one of the preceding claims, **characterized in that** in the off-road mode the display (1) can be controlled by means of the control device (5) such that the maximum speed of the scale (19) for the display of the speed of the vehicle (10) is reduced.

13. The display device for a vehicle (10) having
- at least one display (1),
- a control device (5), which is coupled with the display (1) and by means of which graphic data can be generated for display on the display (1), and
- a first sensor (9-2) with which the energy consumption at least of the drive motor of the vehicle (10) can be detected and can be stored by means of a memory (5-1),
**characterized in that**
- depending on the stored data for the energy consumption the remaining range, the distance to the next gas station and the remaining range minus the distance from the destination of the destination guide device can be displayed by means of he control device (5) on a single distance scale (14).

14. The display device for a vehicle (10) having
- at least one display (1),
- a control device (5), which is coupled with the display (1) and by means of which graphic data can be generated for display on the display (1), and
- a first sensor (9-2) with which the energy consumption at least of the drive motor of the vehicle (10) can be detected and can be stored by means of a memory (5-1),
**characterized in that**
- depending on the stored data for the energy consumption the remaining range, the difference of the remaining range and the distance to the next gas station and the distance from the destination of the destination guide device can be displayed by means of he control device (5) on a single distance scale (14).

## Revendications

1. Dispositif d'affichage pour un véhicule (10) avec
- au moins un écran (1),
- un dispositif de commande (5) qui est couplé avec l'écran (1) et au moyen duquel des données graphiques peuvent être générées pour un affichage sur l'écran (1) et
- un premier capteur (9-2) avec lequel la consommation d'énergie d'au moins le moteur d'entraînement du véhicule (10) peut être mesurée et enregistrée au moyen d'une mémoire (5-1),
**caractérisé en ce que**
- en fonction des données enregistrées pour la consommation d'énergie, le rayon d'action restant, la distance de la station-service la plus proche et la distance par rapport à la destination peuvent être affichés sur le dispositif de guidage au moyen du dispositif de commande (5) sur une seule échelle de distance (14).

2. Dispositif d'affichage selon la revendication 1, **caractérisé en ce que** le rayon d'action restant, la distance de la station-service la plus proche et la distance par rapport à la destination peuvent être affichés sur le dispositif de guidage au moyen de plusieurs aiguilles (15, 16, 17) sur l'échelle de distance (14).

3. Dispositif d'affichage selon la revendication 1 ou 2, **caractérisé en ce que**, dans la zone limite de l'échelle de distance (14), la réserve de carburant du véhicule (10) peut être affichée par un élément d'affichage (18).

4. Dispositif d'affichage selon l'une des revendications précédentes, **caractérisé en ce que** le dispositif d'affichage comprend une interface (6) pour la réception d'un signal de commande pour le réglage d'un mode et **en ce que**, en fonction d'un signal de commande transmis par l'intermédiaire de l'interface, l'écran (1) puisse être contrôlé au moyen du dispositif de commande (5) de façon à ce que les contenus de l'affichage soient affichés dans au moins un mode sport, un mode ville ou un mode offroad.

5. Dispositif d'affichage selon l'une des revendications précédentes, **caractérisé en ce que**, devant l'écran (1) est disposé un masque (3) qui divise l'écran en au moins trois chambres (4-1, 4-2, 4-3).

6. Dispositif d'affichage selon la revendication 5, **caractérisé en ce que**, indépendamment du mode réglé, l'écran (1) peut être contrôlé au moyen du dispositif de commande (5) de façon à ce que, dans la première chambre (4-1), soient représentées des informations d'un dispositif de guidage.

7. Dispositif d'affichage selon la revendication 5 ou 6, **caractérisé en ce que** l'écran (1) peut être contrôlé au moyen du dispositif de commande (5) de façon à ce que, dans la deuxième chambre (4-3), soit affichée une échelle pour l'affichage de la vitesse du véhicule (10) et, dans la troisième chambre (4-2), soit affichée une échelle pour l'affichage d'au moins un autre paramètre de fonctionnement du véhicule.

8. Dispositif d'affichage selon l'une des revendications précédentes, **caractérisé en ce que**, en mode sport, la puissance du moteur d'entraînement du véhicule (10) puisse être mesurée au moyen d'un deuxième capteur (9-1) et puisse être enregistrée au moyen d'une mémoire (5-1) et **en ce que** la puissance du moteur d'entraînement puisse être affichée sur l'écran au moyen du dispositif de commande (5) en fonction des données enregistrées pour la puissance du moteur d'entraînement pendant un intervalle de temps écoulé.

9. Dispositif d'affichage selon l'une des revendications précédentes, **caractérisé en ce que**, en mode ville, la consommation d'énergie d'au moins le moteur d'entraînement du véhicule (10) peut être mesurée au moyen du premier capteur (9-2) et peut être enregistrée au moyen de la mémoire (5-1) et **en ce que** la consommation d'énergie du moteur d'entraînement peut être affichée sur l'écran (1) au moyen du dispositif de commande (5) en fonction des données enregistrées pour la consommation d'énergie du moteur d'entraînement pendant un intervalle de temps écoulé.

10. Dispositif d'affichage selon l'une des revendications précédentes, **caractérisé en ce que**, en mode offroad, la consommation d'énergie d'au moins le moteur d'entraînement du véhicule (10) peut être mesurée au moyen du premier capteur (9-2) et peut être enregistrée au moyen de la mémoire (5-1) et **en ce que** le rayon d'action restant, la distance de la station-service la plus proche et/ou la distance par rapport à une destination peut/peuvent être affiché(s) sur l'écran (1) au moyen du dispositif de commande (5) en fonction des données enregistrées pour la consommation d'énergie dans l'échelle de distance (14) pour un autre paramètre de fonctionnement du véhicule (10).

11. Dispositif d'affichage selon l'une des revendications précédentes, **caractérisé en ce que**, en mode offroad, la garde au sol du véhicule peut être mesurée au moyen d'un troisième capteur (9-3) et la garde au sol du véhicule (10) peut être affichée sur l'écran (1) au moyen du dispositif de commande.

12. Dispositif d'affichage selon l'une des revendications précédentes, **caractérisé en ce que**, en mode offroad, l'écran (1) peut être contrôlé au moyen du dispositif de commande (5) de façon à ce que la vitesse maximale de l'échelle (19) pour l'affichage de la vitesse du véhicule (10) soit diminuée.

13. Dispositif d'affichage pour un véhicule (10) avec
- au moins un écran (1),
- un dispositif de commande (5) qui est couplé avec l'écran (1) et au moyen duquel des données graphiques peuvent être générées pour un affichage sur l'écran (1) et
- un premier capteur (9-2) avec lequel la consommation d'énergie d'au moins le moteur d'entraînement du véhicule (10) peut être mesurée et enregistrée au moyen d'une mémoire (5-1),
**caractérisé en ce que**
- en fonction des données enregistrées pour la consommation d'énergie, le rayon d'action restant, la distance de la station-service la plus proche et le rayon d'action moins la distance par rapport à la destination peuvent être affichés sur le dispositif de guidage au moyen du dispositif de commande (5) sur une seule échelle de distance (14).

14. Dispositif d'affichage pour un véhicule (10) avec
- au moins un écran (1),
- un dispositif de commande (5) qui est couplé avec l'écran (1) et au moyen duquel des données graphiques peuvent être générées pour un affichage sur l'écran (1) et
- un premier capteur (9-2) avec lequel la consommation d'énergie d'au moins le moteur d'entraînement du véhicule (10) peut être mesurée et enregistrée au moyen d'une mémoire (5-1),
**caractérisé en ce que**
- en fonction des données enregistrées pour la consommation d'énergie, le rayon d'action restant, la différence entre le rayon d'action restant et la distance de la station-service la plus proche et la distance par rapport à la destination peuvent être affichés sur le dispositif de guidage au moyen du dispositif de commande (5) sur une seule échelle de distance (14).
